# EUROPEAN PATENT SPECIFICATION

(11) **EP 1 094 698 B1**
(45) Date of publication and mention of the grant of the patent: **09.10.2002**
(21) Application number: 99939822.5
(22) Date of filing: 04.06.1999
(51) Int. Cl.: A01D 34/64

(54) **DECK LEVELING MECHANISM**
MÄHERGEHÄUSE MIT NIVELLIERUNGSMECHANISMUS
MECANISME DE REGLAGE DU PLATEAU DE COUPE

(30) Priority: 05.06.1998 US 88315 P
(43) Date of publication of application: 02.05.2001
(73) Proprietor: MTD Products Inc., Cleveland, OH 44136-9722 (US)
(72) Inventor: KRUEGER, Erik, Medina, OH 44256 (US)
(74) Representative: Freischem, Stephan, Dipl.-Ing.
(86) International application number: PCT/US99/12678
(87) International publication number: WO 99/062320

(56) References cited:
- EP-A- 0 224 803
- DE-A- 2 127 247
- FR-A- 1 183 643
- US-A- 2 909 884
- US-A- 3 063 226
- US-A- 4 840 020
- US-A- 5 065 568
- PATENT ABSTRACTS OF JAPAN vol. 097, no. 008, 29 August 1997 (1997-08-29) & JP 09 098630 A (KUBOTA CORP), 15 April 1997 (1997-04-15)

## Description

### Technical Field

This invention pertains to the art of methods and apparatuses for height adjusting mower decks, and more specifically to methods and apparatuses for leveling the height of a mower deck.

### Background Art

An operator or user of a mower usually expects a somewhat homogeneous level or depth of grass to result after mowing his yard. In order to have a homogeneous depth of grass after mowing, the blade(s) within a mower deck must rotate in a plane that is substantially parallel to the plane of the ground. Because this result is critical to customer satisfaction and a quality cut, mower manufactures typically level the mower decks both front-to-back and side-to-side before offering them for purchase. This ensures that the plane of rotation of the blade(s) is substantially parallel to the plane of the ground. This increases customer draw and ensures customer satisfaction and loyalty. Thus, the leveling of mower decks on riding mowers is generally known.

However, the known methods and apparatuses for leveling mower decks require difficult and time-consuming adjustments. Typically, the process of leveling mower decks requires numerous steps and involves the removal and reattachment of multiple parts. This is a slow and arduous process with disadvantageous circumstances such as economic inefficiencies.

French patent FR-A-1 183 643 to Despres discloses a mower including a frame and a mower deck. The patent further discloses a leveling mechanism operatively connected to the frame and mower deck for use in leveling the height of the mower deck, which is adjusted by manually actuating a ratcheting mechanism connected to a rack and pinion.

U.S. Patent No. 4,840,020 to Oka discloses a rotary mower including a mower deck and a cutting height adjustment structure. The patent further discloses that the adjustment structure includes a deck bracket mounted to the upper portion of the deck and a pair of cam shaped adjustment members each with a plurality of adjustment holes or settings. A bolt-nut securing means is provided for operatively connecting the cam shaped members to the deck bracket. This patent incorporates only discrete positioning of the cam members.

Most often in the art, a cotter pin or the like is removed first. Removing the cotter pin usually releases the deck from its affixation to the frame or other part of the mower. The deck is then able to be adjusted via some adjustment means. The adjustment means is usually a screw or bolt that "ratchets" part of the deck up or down with respect to the ground so that the deck becomes substantially parallel to the ground. However, in the related art the cotter pin usually needs to be reinserted into the deck before the deck can be re-measured to determine if the deck has been properly "ratcheted" and thus substantially parallel to the ground. If the deck is not leveled on the first attempt, the leveling process must be repeated until the deck is successfully leveled. Thus, it is readily apparent that this process wears on both the cotter pin and the adjustment means as well as the individual doing the leveling.

It would be desirable to have a simple and inexpensive deck height adjustment mechanism with fewer parts than the related art and that simplifies the leveling process. Applicant has accomplished this by inventing a deck height adjustment mechanism that requires fewer parts and less time to level a mower deck. Thus, the many steps required in the art may be accomplished in one step with the deck height adjustment mechanism of the current invention. The difficulties inherent in the art are therefore overcome in a way that is simple and efficient while providing better and more advantageous results.

### Disclosure of the Invention

According to one aspect of this invention, a mower is provided. The mower includes a frame, a mower deck operatively connected to the frame, and a deck leveling mechanism for use in leveling the height of the mower deck with respect to the frame. The deck leveling mechanism includes a rack and pinion.

According to another aspect of this invention, the deck leveling mechanism includes at least one link pivotably connected to the frame and a deck bracket fixedly connected to the mower deck and having engagement teeth. The deck leveling mechanism also includes an adjustment bracket operatively connected to the link and an adjustment cam having cam teeth that are selectively received by the engagement teeth. The adjustment cam can be adjusted to move the deck bracket relative to the adjustment bracket and thus to move the mower deck relative to the frame. Finally, securing means (preferably a tightening bolt) is provided in order to secure the deck bracket and the mower deck relative to the frame.

According to still another aspect of this invention, a method of leveling the height of a mower deck is provided. First, a tightening bolt is loosened. Next the adjustment cam is rotated. This moves the mower deck relative to the frame. When the mower deck is appropriately leveled, the mower deck is secured (using a tightening bolt) to that level.

One advantage of the present invention is that it is easy to manufacture and can be made economically.

Another advantage of the current invention is that it allows a mower deck to be leveled faster, easier and with fewer parts.

Still other benefits and advantages of the invention will become apparent to those skilled in the art to which it pertains upon a reading and understanding of the following detailed specification.

### Brief Description of the Drawings

The invention may take physical form in certain parts and arrangement of parts, a preferred embodiment of which will be described in detail in this specification and illustrated in the accompanying drawings which form a part hereof and wherein:
FIGURE 1 is a side elevation view of a riding mower equipped with the deck leveling mechanism of the present invention.
FIGURE 2 is a perspective view of the major components of the deck leveling mechanism shown disassembled with the cam side of the adjustment cam visible.
FIGURE 3 is a perspective view of the major components of the deck leveling mechanism shown partially assembled with the nut side of the adjustment cam visible.

### Description of the Preferred Embodiment

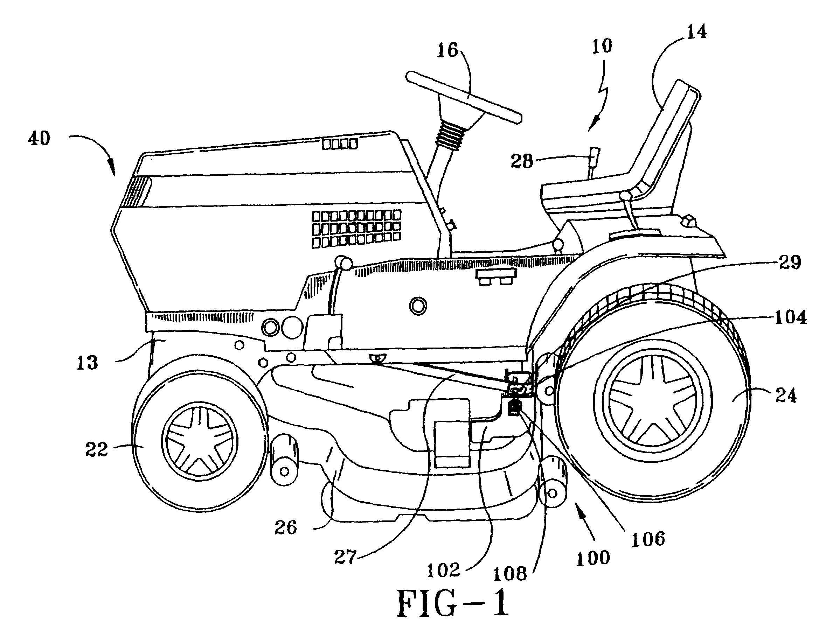

Referring now to the drawings wherein the showings are for purposes of illustrating a preferred embodiment of the invention only and not for purposes of limiting the same, FIGURE 1 shows a mower 10 which is equipped with a deck leveling mechanism 100 in accordance with this invention. This preferred embodiment is directed to a riding lawn mower but the invention is applicable to other mowers, and other applications as well. The mower 10 includes a frame 13, an operator seat 14 and a steering implement 16 for steering front wheels 22. An engine 40 is used to drive back wheels 24 and to rotate one or more cutting blades (not shown) within a mower deck 26. The operation of the cutting blades is well known in the art and thus will not be discussed further in this specification.

Still referring to FIGURE 1, the mower deck 26 is movably attached to the frame 13 so that the mower deck 26 can be height adjusted as required. At least one but preferably four (two in front of the deck and two in back) links 27 are provided for this movement. Only one link is shown in FIGURE 1. Each link 27 has one end pivotably attached to the frame 13 and the other end operatively attached to the mower deck 26. A deck lift lever 28 is provided for the operator to height adjust the mower deck 26. The deck lift lever 28 may be attached to the links 27 or deck 26 by any manner chosen with sound engineering judgment to accomplish this height adjustment. The deck leveling mechanism 100 is used to selectively level the height of the mower deck 26 and is especially useful for side-to-side adjustment of the deck 26. This leveling is ordinarily performed during the assembly of the mower 10 but could be performed any time as desired. Multiple deck leveling mechanisms 100 may be used (one on each side of the mower deck 26, for example) but only one deck leveling mechanisms 100 is required and is preferred.

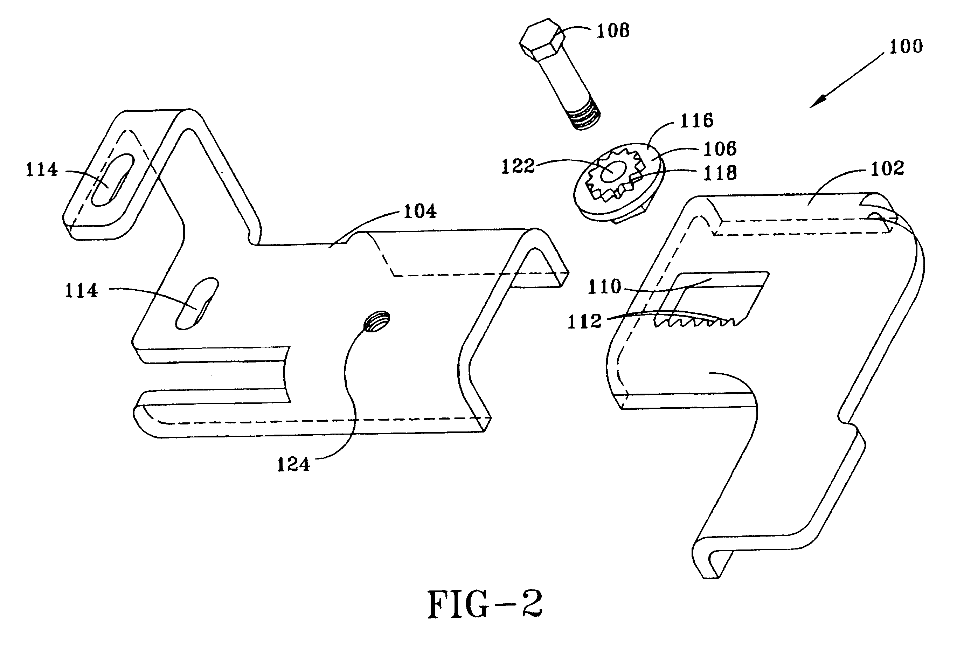

With reference now to FIGURES 1-3, the major components of the deck leveling mechanism 100 will now be discussed. The major components are shown disconnected from the frame 13 of the riding mower 10 and the mower deck 26 in FIGURES 2-3. The components include a deck bracket 102, an adjustment bracket 104, an adjustment cam 106 and a tightening bolt 108. It should be understood that the deck bracket 102, when assembled, is either fixedly connected to the mower deck 26 (preferably using a weld) or is an integral part of the mower deck 26. The adjustment bracket 104 is detachably connected to the link 27. In the preferred embodiment the adjustment bracket 104 has at least one connection aperture 114 for receiving a quick connection pin 29 to hold the adjustment bracket 104 to the link 27. The quick connection pin 29 provides an easy way to disconnect the mower deck 26 from the mower 10 as when the mower deck 26 is being removed.

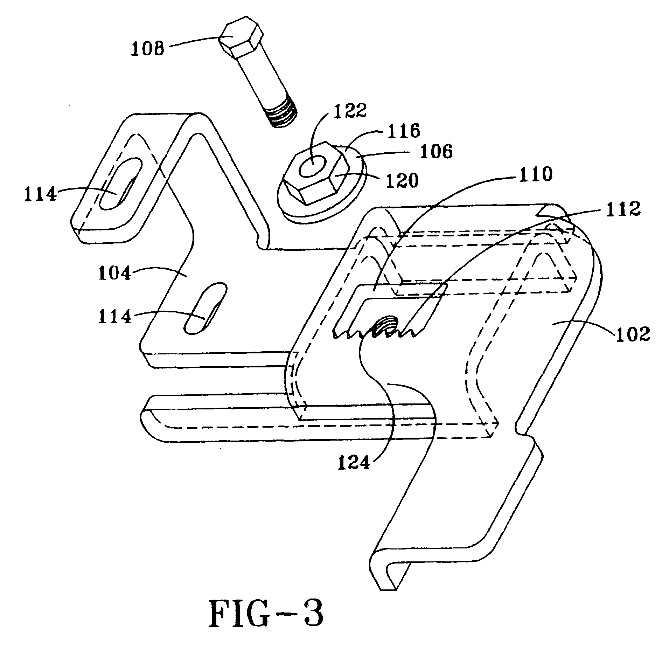

With continuing reference to FIGURES 1-3, the deck bracket 102 has a generally rectangular shaped opening 110 with engagement teeth 112 along one side of the opening 110. The adjustment cam 106 has a generally circular main body 116, with cam teeth 118 on one side (seen best in FIGURE 2) and an adjustment nut 120 on the other side (seen best in FIGURE 3). The cam teeth 118 are preferably star shaped and preferably extend outwardly from the center of the adjustment cam 106 as shown. The cam teeth 118 are received by the engagement teeth 112 as will be discussed further below. A hole 122 is preferably centered through the adjustment cam 106 and is used to receive the tightening bolt 108. The adjustment bracket 104 has an aperture 124 that is preferably threaded for receiving threads on tightening bolt 108.

Still referring to FIGURES 1-3, during the assembly of the mower 10, the adjustment bracket 104 is attached to the deck bracket 102 as shown in FIGURE 3. The adjustment bracket 104 is positioned with respect to the deck bracket 102 such that the opening 110 is positioned over the aperture 124. The adjustment cam 106 is then placed within the opening 110 such that the cam teeth 118 are received by the engagement teeth 112 of the deck bracket 102. The tightening bolt 108 is then extended through the hole 122 in the adjustment cam 106, through the opening 110 in the deck bracket 102, and into the aperture 124 in the adjustment bracket where the tightening bolt 108 is then threadedly connected. The adjustment bracket 104 is attached to the link 27 by extending the connection pin 29 through connection aperture 114 and through a hole (not shown) in the link 27.

With continuing reference to FIGURES 1-3, to adjust the deck leveling mechanism 100, the tightening bolt 108 is fist loosened. Then a wrench or other workable tool (not shown) is used to turn (rotate) the adjustment cam 106 by the adjustment nut 120. As the adjustment cam 106 is rotated, it causes the deck bracket 102 (and thus the mower deck 26) to move upwardly or downwardly relative to the adjustment bracket 104, the link 27 and thus the frame 13. In this way, the engagement teeth 112 of the opening 110 and the adjustment cam 16 work together as a rack and pinion respectively. This provides an easy way for the mower deck 26 to be finely level adjusted as required. Once the proper adjustment is made, the tightening bolt 108 is tightened thereby securing the adjustment cam 106, deck bracket 102, and adjustment bracket 104 together and therefore securing the mower deck 26 to the appropriate level.

The invention has been described with reference to preferred embodiments. Obviously, modifications and alterations will occur to others upon a reading and understanding of this specification. It is intended to include all such modifications and alternations in so far as they come within the scope of the appended claims or the equivalents thereof.

Having thus described the invention, it is now claimed:

## Claims

1. A mower (10) including a frame (13), a mower deck (26) operatively connected to said frame (13), and a deck leveling mechanism (100) for use in leveling the height of said mower deck (26) with respect to said frame (13), said deck leveling mechanism (100) comprises:
- at least one link (27) pivotally connected to said frame (13);
- a deck bracket (102) fixedly connected to said mower deck (26);
- an adjustment bracket (104) operatively connected to said link (27);
- an adjustment cam (106) being selectively adjustable to move said deck bracket (102) relative to said adjustment bracket (104) and thus to move said mower deck (26) relative to said frame (13);
- securing means (106, 108) for securing said adjustment bracket (104) and said mower deck (26) relative to said frame (13);
**characterized in**
**that** said deck bracket (102) has engagement teeth (112) positioned along one side of an opening (110) in said deck bracket (102), and said adjustment cam (106) has cam teeth (118) that are selectively received by said engagement teeth (112).

2. The mower according to claim 1, **characterized in that** said adjustment cam (106) has a generally circular main body with said cam teeth (118) on one side of said main body and an adjustment nut (120) on the other side of said main body.

3. The mower according to 2, **characterized in that** said cam teeth (118) extend outwardly from the center of said adjustment cam (106).

4. The mower according to at least one of the preceding claims, **characterized in** securing means comprises:
- a tightening bolt (108) having threads, said adjustment cam (106) having a hole (122) centered through said adjustment cam (106) that receives said tightening bolt (108), said adjustment bracket (104) having an aperture (124) that is threaded for receiving said threads on said tightening bolt (108).

5. The mower according to claim 1, **characterized in that** said adjustment bracket (104) has at least one connection aperture (114) for receiving at least one connection pin (29) to connect said adjustment bracket (104) to said link (27).

6. The mower according to claim 5, **characterized in that** said connection pin (29) is a quick connection pin 29.

7. A method of leveling the height of a mower deck (26) including the steps of
- providing a mower (10) having a frame (13) and a mower deck (26) operatively connected to said frame (13),
- providing a deck leveling mechanism (100) for use in leveling the height of said mower deck (26) with respect to said frame (13),
- providing said deck leveling mechanism (100) with a deck bracket (102) fixedly connected to said mower deck (26), an adjustment bracket (104) operatively connected to said frame (13), and an adjustment cam (106),
- rotating said adjustment cam (106);
- moving said mower deck (26) relative to said frame(13), and
- securing said mower deck )26) to the appropriate level
**characterized by**
- providing said deck leveling mechanism (100) with said deck bracket (102) having engagement teeth (112) positioned along one siedde of an opening in said deck bracket (102) and with said adjustment cam (106) having cam teeth (118) that are selectively received by said engagement teeth (112).

8. The method according to claim 7, **characterized in that** it further comprises the steps of:
- providing said adjustment cam (106) with a main body, said cam teeth (118) being located on one side of said main body and an adjustment nut (120) being located on the other side of said main body; and,
- said step of rotating said adjustment cam (106) comprises the step of applying a tool to said adjustment nut (120) to thereby rotate said adjustment cam (106).

9. The method according to claim 8, **characterized in that** it further comprises the steps of:
- providing said adjustment cam (106) with a hole (122) centered through said adjustment cam (106);
- providing said adjustment bracket (104) with a threaded aperture (124);
- providing a tightening bolt (108) having threads;
- placing said tightening bolt (108) through said hole (122) in said adjustment cam (106) and through said threaded aperture (122) in said adjustment bracket (104); and,
- said step of securing said mower deck (26) to the appropriate level comprises the steps of tightening said threads of said tightening bolt (108) into said threaded aperture (124).

10. The method according to claim 9, **characterized in that**, before the step of rotating said adjustment cam (106), the method comprises the step of:
- loosening said tightening bolt (106) within said threaded aperture (124).

11. A mower (10) including a frame (13), a mower deck (26) operatively connected to said frame (13), and a deck leveling mechanism (100) for use in leveling the height of said mower deck (26) with respect to said frame (13), said deck leveling mechanism (100) comprises:
- at least one link (27) pivotally connected to said frame (13);
- a deck bracket (102) fixedly connected to said mower deck (26);
- an adjustment bracket (104) operatively connected to said link (27);
- an adjustment cam (106) being selectively adjustable to move said deck bracket (102) relative to said adjustment bracket (104) and thus to move said mower deck (26) relative to said frame (13); and
- securing means for securing said adjustment bracket (104) and said mower deck (26) relative to said frame (13), said securing means comprise a bolt (108),
**characterized in that**
- said deck bracket (102) has engagement teeth (112);
- said adjustment cam (106) has cam teeth (118) that are selectively received by said engagement teeth (112) and said adjustment cam (106) has a hole (122) centered therethrough; and
- said securing means comprises a tightening bolt (108) having threads and being received by said hole (122) centered through said adjustment cam (106), said adjustment bracket (104) having an aperture (124) that is threaded for receiving said threads on said tightening bolt (108).

## Patentansprüche

1. Mäher (10), enthaltend einen Rahmen (13), ein Mähergehäuse (26), das wirkend mit dem Rahmen (13) verbunden ist, und einen Gehäuse-Nivellierungsmechanismus (100) zur Verwendung bei der Nivellierung der Höhe des Mähergehäuses (26) hinsichtlich des Rahmens (13), wobei der Gehäuse-Nivellierungsmechanismus (100) umfaßt:
- mindestens ein Glied (27), das drehbar mit dem Rahmen (13) verbunden ist;
- einen Gehäusearm (102), der fest mit dem Mähergehäuse (26) verbunden ist;
- einen Verstellarm (104), der wirkend mit dem Glied (27) verbunden ist;
- ein Verstellteil (106), das selektiv einstellbar ist, um den Gehäusearm (102) relativ zum Verstellarm (104) zu bewegen und somit das Mähergehäuse (26) relativ zum Rahmen (13) zu bewegen;
- Sicherungsmittel (106,108) zum Sichern des Verstellarms (104) und des Mähergehäuses (26) relativ zum Rahmen (13);
**dadurch gekennzeichnet, daß**
der Verstellarm (102) Eingriffszähne (112) aufweist, die entlang einer Seite einer Öffnung (110) in dem Gehäusearm (102) positioniert sind, und daß das Verstellteil (106) Zähne (118) aufweist, die selektiv durch die Eingriffszähne (112) aufgenommen werden.

2. Der Mäher nach Anspruch 1, **dadurch gekennzeichnet, daß** das Verstellteil (106) im wesentlichen einen kreisförmigen Hauptkörper mit den Zähnen (118) auf einer Seite des Hauptkörpers und einer Verstellmutter (120) auf der anderen Seite des Hauptkörpers aufweist.

3. Der Mäher nach Anspruch 2, **dadurch gekennzeichnet, daß** die Zähne (118) sich nach außen vom Mittelpunkt des Verstellteils (106) erstrecken.

4. Der Mäher nach mindestens einem der vorhergehenden Ansprüche, **dadurch gekennzeichnet, daß** die Sicherungsmittel umfassen:
- einen Spannbolzen (108) mit Gewindegängen, wobei das Verstellteil (106) ein Loch (122) aufweist, das durch das Verstellteil (106) zentriert angeordnet ist, das den Spannbolzen (108) aufnimmt, wobei der Verstellarm (104) eine Öffnung (124) aufweist, die mit einem Gewinde zur Aufnahme der Gewindegänge an dem Spannbolzen (108) versehen ist.

5. Der Mäher nach Anspruch 1, **dadurch gekennzeichnet, daß** der Verstellarm (104) mindestens eine Verbindungsöffnung (114) zur Aufnahme mindestens eines Verbindungsstiftes (29) aufweist, um den Verstellarm (104) mit dem Glied (27) zu verbinden.

6. Der Mäher nach Anspruch 5, **dadurch gekennzeichnet, daß** der Verbindungsstift (29) ein Schnellverbindungsstift (29) ist.

7. Verfahren zum Nivellieren der Höhe eines Mähergehäuses (26), enthaltend die Schritte
- Bereitstellen eines Mähers (10) mit einem Rahmen (13) und einem Mähergehäuse (26), das wirkend mit dem Rahmen (13) verbunden ist,
- Bereitstellen eines Gehäuse-Nivellierungsmechanismus (100) zur Verwendung bei der Nivellierung der Höhe des Mähergehäuses (26) hinsichtlich des Rahmens (13),
- Bereitstellen des Gehäuse-Nivellierungsmechanismus (100) mit einem Gehäusearm (102), der fest mit dem Mähergehäuse (26) verbunden ist, einem Verstellarm (104), der wirkend mit dem Rahmen (13) verbunden ist, und einem Verstellteil (106),
- Drehen des Verstellteils (106);
- Bewegen des Mähergehäuses (26) relativ zum Rahmen (13), und
- Sichern des Mähergehäuses (26) an der passenden Höhe
**gekennzeichnet durch**
- Bereitstellen des Gehäuse-Nivellierungsmechanismus (100) mit dem Gehäusearm (102), der Eingriffszähne (112) aufweist, die entlang einer Seite einer Öffnung im Gehäusearm (102) positioniert sind, und mit dem Verstellteil (106), das Zähne (118) aufweist, die selektiv **durch** die Eingriffszähne (112) aufgenommen werden.

8. Verfahren nach Anspruch 7, **dadurch gekennzeichnet, daß** es weiterhin die Schritte umfaßt:
- Bereitstellen des Verstellteils (106) mit einem Hauptkörper, wobei die Zähne (118) auf einer Seite des Hauptkörpers angeordnet sind und eine Verstellmutter (120) auf der anderen Seite des Hauptkörpers angeordnet ist; und
- wobei der Schritt des Drehens des Verstellteils (106) den Schritt des Anwendens eines Werkzeugs an der Verstellmutter (120) umfaßt, um somit das Verstellteil (106) zu drehen.

9. Verfahren nach Anspruch 8, **dadurch gekennzeichnet, daß** es weiterhin die Schritte umfaßt:
- Bereitstellen des Verstellteils (106) mit einem Loch (122), das durch das Verstellteil (106) zentriert angeordnet ist;
- Bereitstellen des Verstellarms (104) mit einer Öffnung (124) mit Gewinde;
- Bereitstellen eines Spannbolzens (108) mit Gewindegängen;
- Anordnen des Spannbolzens (108) durch das Loch (122) in dem Verstellteil (106) und durch die Öffnung (122) mit dem Gewinde in dem Verstellarm (104); und
- wobei der Schritt des Sicherns des Mähergehäuses (26) an der passenden Höhe die Schritte des Festziehens der Gewindegänge des Spannbolzens (108) in der Öffnung (124) mit dem Gewinde umfaßt.

10. Verfahren nach Anspruch 9, **dadurch gekennzeichnet, daß** vor dem Schritt des Drehens des Verstellteils (106) das Verfahren den Schritt umfaßt:
- Lösen des Spannbolzens (106) in der Öffnung (124) mit Gewinde.

11. Mäher (10), enthaltend einen Rahmen (13), ein Mähergehäuse (26), das wirkend mit dem Rahmen (13) verbunden ist, und einen Gehäuse-Nivellierungsmechanismus (100) zur Verwendung bei derNivellierung der Höhe des Mähergehäuses (26) hinsichtlich des Rahmens (13), wobei der Gehäuse-Nivellierungsmechanismus (100) umfaßt:
- mindestens ein Glied (27), das drehbar mit dem Rahmen (13) verbunden ist;
- einen Gehäusearm (102), der fest mit dem Mähergehäuse (26) verbunden ist;
- einen Verstellarm (104), der wirkend mit dem Glied (27) verbunden ist;
- ein Verstellteil (106), das selektiv einstellbar ist, um den Gehäusearm (102) relativ zum Verstellarm (104) zu bewegen und somit das Mähergehäuse (26) relativ zum Rahmen (13) zu bewegen; und
- Sicherungsmittel zum Sichern des Verstellarms (104) und des Mähergehäuses (26) relativ zum Rahmen (13), wobei die Sicherungsmittel einen Bolzen (108) umfassen,
**dadurch gekennzeichnet, daß**
- der Gehäusearm (102) Eingriffszähne (112) aufweist;
- das Verstellteil (106) Zähne (118) aufweist, die selektiv durch die Eingriffszähne (112) aufgenommen werden, und das Verstellteil (106) ein Loch (122) aufweist, das hierdurch zentriert angeordnet ist; und
- die Sicherungsmittel einen Spannbolzen (108) umfassen, der Gewindegänge aufweist und durch das Loch (122) aufgenommen wird, das durch das Verstellteil (106) zentriert angeordnet ist, wobei der Verstellarm (104) eine Öffnung (124) aufweist, die mit einem Gewinde zur Aufnahme der Gewindegänge des Spannbolzens (108) versehen ist.

## Revendications

1. Tondeuse (10) comportant un châssis (13), un plateau de tondeuse (26) connecté de manière opérationnelle audit châssis (13), et un mécanisme de mise à niveau de plateau (100) destiné à être utilisé lors de la mise à niveau de la hauteur dudit plateau de tondeuse (26) par rapport audit châssis (13), ledit mécanisme de mise à niveau de plateau (100) comportant
- au moins une biellette (27) connectée de manière pivotante audit châssis (13),
- un étrier de plateau (102) connecté de manière fixe audit plateau de tondeuse (26),
- un étrier d'ajustement (104) connecté de manière opérationnelle à ladite biellette (27),
- une came d'ajustement (106) pouvant être ajustée de manière sélective pour déplacer ledit étrier de plateau (102) par rapport audit étrier d'ajustement (104), et donc pour déplacer ledit plateau de tondeuse (26) par rapport audit châssis (13),
- des moyens de fixation (106, 108) pour fixer ledit étrier d'ajustement (104) et ledit plateau de tondeuse (26) par rapport audit châssis (13),
**caractérisé en ce que**
ledit étrier de plateau (102) a des dents d'engrènement (112) positionnées le long d'un côté d'une ouverture (110) située dans ledit étrier de plateau (102), et ladite came d'ajustement (106) a des dents de came (118) qui sont reçues de manière sélective par lesdites dents d'engrènement (112).

2. Tondeuse selon la revendication 1, **caractérisée en ce que** ladite came d'ajustement (106) a un corps principal généralement circulaire muni desdites dents de came (118) sur un premier côté dudit corps principal, et d'un écrou d'ajustement (120) sur l'autre côté dudit corps principal.

3. Tondeuse selon la revendication 2, **caractérisée en ce que** lesdites dents de came (118) s'étendent vers l'extérieur à partir du centre de ladite came d'ajustement (106).

4. Tondeuse selon l'une quelconque des revendications précédentes, **caractérisée en ce que** les moyens de fixation comportent :
- un boulon de serrage (108) ayant des filets, ladite came d'ajustement (106) ayant un trou (122) centré à travers ladite came d'ajustement (106) qui reçoit ledit boulon de serrage (108), ledit étrier d'ajustement (104) ayant une ouverture (124) qui est filetée pour recevoir lesdits filets dudit boulon de serrage (108).

5. Tondeuse selon la revendication 1, **caractérisée en ce que** ledit étrier d'ajustement (104) a au moins une ouverture de connexion (114) destinée à recevoir au moins une broche de connexion (29) pour connecter ledit étrier d'ajustement (104) à ladite biellette (27).

6. Tondeuse selon la revendication 5, **caractérisée en ce que** ladite broche de connexion (29) est une broche de connexion rapide (29).

7. Procédé de mise à niveau de la hauteur d'un plateau de tondeuse (26) comportant les étapes consistant à :
- fournir une tondeuse (10) ayant un châssis (13) et un plateau de tondeuse (26) connecté de manière opérationnelle audit châssis (13),
- fournir un mécanisme de mise à niveau de plateau (100) destiné à être utilisé lors de la mise à niveau de la hauteur dudit plateau de tondeuse (26) par rapport audit châssis (13),
- fournir audit mécanisme de mise à niveau de plateau (100), un étrier de plateau (102) connecté de manière fixe audit plateau de tondeuse (26), un étrier d'ajustement (104) connecté de manière opérationnelle audit châssis (13), et une came d'ajustement (106),
- mettre en rotation ladite came d'ajustement (106),
- déplacer ledit plateau de tondeuse (26) par rapport audit châssis (13), et
- fixer ledit plateau de tondeuse (26) au niveau approprié
**caractérisé par** les étapes supplémentaires consistant à :
- fournir audit mécanisme de mise à niveau de plateau (100) ledit étrier de plateau (102) ayant des dents d'engrènement (112) positionnées le long d'un côté d'une ouverture située dans ledit étrier de plateau (102), et ladite came d'ajustement (106) ayant des dents de came (118) qui sont reçues de manière sélective par lesdites dents d'engrènement (112).

8. Procédé selon la revendication 7, **caractérisé en ce qu'**il comporte de plus les étapes consistant à :
- fournir à ladite came d'ajustement (106) un corps principal, lesdites dents de came (118) étant positionnées sur un premier côté dudit corps principal, et un écrou d'ajustement (120) étant positionné sur l'autre côté dudit corps principal, et
- ladite étape consistant à mettre en rotation ladite came d'ajustement (106) comporte l'étape consistant à appliquer un outil audit écrou d'ajustement (120) pour ainsi mettre en rotation ladite came d'ajustement (106).

9. Procédé selon la revendication 8, **caractérisé en ce qu'**il comporte de plus les étapes consistant à :
- fournir à ladite came d'ajustement (106) un trou (122) centré à travers ladite came d'ajustement (106),
- fournir audit étrier d'ajustement (104) une ouverture filetée (124),
- fournir un boulon de serrage (108) ayant des filets,
- placer ledit boulon de serrage (108) à travers ledit trou (122) situé dans ladite came d'ajustement (106), et à travers ladite ouverture filetée (122) située dans ledit étrier d'ajustement (104), et
- ladite étape consistant à fixer ledit plateau de tondeuse (26) au niveau approprié comporte l'étape consistant à serrer lesdits filets dudit boulon de serrage (108) dans ladite ouverture filetée (124).

10. Procédé selon la revendication 9, **caractérisé en ce que**, avant l'étape consistant à mettre en rotation ladite came d'ajustement (106), le procédé comporte l'étape consistant à :
- desserrer ledit boulon de serrage (106) dans ladite ouverture filetée (124).

11. Tondeuse (10) comportant un châssis (13), un plateau de tondeuse (26) connecté de manière opérationnelle audit châssis (13), et un mécanisme de mise à niveau de plateau (100) destiné à être utilisé lors de la mise à niveau de la hauteur dudit plateau de tondeuse (26) par rapport audit châssis (13), ledit mécanisme de mise à niveau de plateau (100) comportant :
- au moins une biellette (27) connectée de manière pivotante audit châssis (13),
- un étrier de plateau (102) connecté de manière fixe audit plateau de tondeuse (26),
- un étrier d'ajustement (104) connecté de manière opérationnelle à ladite biellette (27),
- une came d'ajustement (106) pouvant être ajustée de manière sélective pour déplacer ledit étrier de plateau (102) par rapport audit étrier d'ajustement (104), et donc pour déplacer ledit plateau de tondeuse (26) par rapport audit châssis (13), et
- des moyens de fixation pour fixer ledit étrier d'ajustement (104) et ledit plateau de tondeuse (26) par rapport audit châssis (13), lesdits moyens de fixation comportant un boulon (108),
**caractérisé en ce que**
- ledit étrier de plateau (102) a des dents d'engrènement (112),
- ladite came d'ajustement (106) a des dents de came (118) qui sont reçues de manière sélective par lesdites dents d'entraînement (102), et ladite came d'ajustement (106) a un trou (122) centré à travers celle-ci, et
- lesdits moyens de fixation comportent un boulon de serrage (108) ayant des filets et étant reçu par ledit trou (122) centré à travers ladite came d'ajustement (106), ledit étrier d'ajustement (104) ayant une ouverture (124) qui est filetée pour réception desdits filets dudit boulon de serrage (108).
